# EUROPEAN PATENT APPLICATION

(11) **EP 4 501 751 A1**
(43) Date of publication of application: **05.02.2025**
(21) Application number: 23207057.3
(22) Date of filing: 31.10.2023
(51) Int. Cl.: B62D 21/14, B60T 7/04, B62D 21/18, B62D 31/00, B62D 25/06

(54) **VEHICLE**

(30) Priority: 31.07.2023 CN 202310954856; 31.07.2023 CN 202322039677 U
(71) Applicant: Zhejiang Chic Robot Technology Co., Ltd., Jinhua Zhejiang 321051 (CN)
(72) Inventor: LUO, Xuepeng, Wucheng District, Jinhua Zhejiang Province, 321051 (CN); BAO, Long, Wucheng District, Jinhua Zhejiang Province, 321051 (CN); LIU, Sen, Wucheng District, Jinhua Zhejiang Province, 321051 (CN); ZHOU, Yongsheng, Wucheng District, Jinhua Zhejiang Province, 321051 (CN); WU, Hao, Wucheng District, Jinhua Zhejiang Province, 321051 (CN)
(74) Representative: Herrero & Asociados, S.L.

(57) **Abstract**

A vehicle includes a body assembly (1), an extension-retraction drive member, and a roof assembly (2). The body assembly includes a front body (11) and a rear body (12). The front body is slidably connected to the rear body. The extension-retraction drive member is connected between the front body and the rear body and is configured to drive the front body and the rear body to be extended and retracted relative to each other. The roof assembly is detachably mounted on the body assembly and includes a front bracket (22), a rear bracket (23), and an upper bracket (21). The front bracket is rotatably connected to the front body, and the front bracket is detachably connected to the upper bracket; the rear bracket is rotatably connected to the rear body, and the rear bracket is detachably connected to the upper bracket.

## Description

### TECHNICAL FIELD

The present disclosure relates to the field of vehicles, and in particular to a vehicle.

### BACKGROUND

A vehicle, especially an electric vehicle for sightseeing, is lightweight and may be easily operated and driven by a driver. The vehicle serves as an important short-distance transport used in golf courses, resorts, villa areas, garden hotels, tourist attractions and so on.

In the art, the electric vehicle for sightseeing may be arranged with a sunshade roof, occupying a relatively large space, such that the vehicle may not be transferred conveniently.

### SUMMARY OF THE DISCLOSURE

The present disclosure provides a vehicle that is capable of being extended and retracted into a relatively small size and may be transferred easily, such that a transferring cost is reduced.

The present disclosure provides a vehicle, including: a body assembly, an extension-retraction drive member, and a roof assembly. The body assembly includes a front body and a rear body, wherein the front body is slidably, in a first direction, connected to the rear body. The extension-retraction drive member is connected between the front body and the rear body, wherein the extension-retraction drive member is configured to drive the front body and the rear body to be extended and retracted relative to each other in the first direction. The roof assembly is detachably mounted on the body assembly and comprising a front bracket, a rear bracket, and an upper bracket; wherein a bottom of the front bracket is rotatably connected to the front body, and a top of the front bracket is detachably connected to the upper bracket; a bottom of the rear bracket is rotatably connected to the rear body, and a top of the rear bracket is detachably connected to the upper bracket.

In some embodiments, the front body comprises a front frame, the front frame is connected with a first tube body extending in the first direction; the rear body comprises a rear frame, the rear frame is connected with a second tube body extending in the first direction; the first tube body is slidably connected with the second tube body, an end of the second tube body is inserted into the first tube body from an end of the first tube body.

In some embodiments, the rear body comprises a limit pin movably connected to the rear frame; the front frame is connected to a limit plate, the limit plate protrudes from the front frame, the limit plate defines a limit hole corresponding to the limit pin.

In some embodiments, the front body is arranged with a front support protruding from the front body; the bottom of the front bracket is in insertion-connection with the front support; one of the bottom of the front bracket and the front support defines a first rounded-rectangular hole extending in a direction of the insertion-connection, the other one of the bottom of the front bracket and the front support defines a through hole and has a limit surface, the limit surface is configured to limit the front bracket from rotating relative to the front support; a first rotation shaft is inserted in the first rounded-rectangular hole and the through hole, a first locking member is inserted in the first rounded-rectangular hole; the front bracket and the front support are fixedly connected to each other by the first locking member.

In some embodiments, the vehicle further includes: a backrest, mounted on the rear body and connected to a third tube body; wherein, the rear body is arranged with a rear support protruding from the rear body; the rear support comprises a fourth tube body, the third tube body is in insertion-connection with the fourth tube body, the third tube body defines a second rounded-rectangular hole; an angle is formed between an extension direction of the second rounded-rectangular hole and a direction of the insertion-connection, a diameter of the second rounded-rectangular hole is gradually increased in a direction away from the backrest, the fourth tube body defines a through hole; a second rotation shaft is inserted in the second rounded-rectangular hole and the through hole, a first snap is rotatably connected to the fourth tube body, the third tube body is arranged with a first hook snapped with the first snap.

In some embodiments, the rear bracket is rotatably connected to the fourth tube body by a third rotation shaft, the rear bracket defines a limit slot, the limit slot extends along an arc, a center of a circle of the arc is located on the third rotation shaft, a limit member is arranged on and protrudes from the fourth tube body, the limit member is received in the limit slot to limit a rotational range of the rear bracket, and the rear bracket is fixedly connected to the fourth tube body by a second locking member.

In some embodiments, the vehicle further includes: a rear pedal, arranged on the rear body, wherein the rear pedal is connected to a fifth tube body. A side of the rear body away from the front body is connected to a sixth tube body, the fifth tube body is in insertion-connection with the sixth tube body, the fifth tube body defines a third rounded-rectangular hole, the third rounded-rectangular hole extends in a direction of the insertion-connection, a diameter of the third rounded-rectangular hole is gradually increased in a direction approaching the rear body, the sixth tube body defines a through hole, a fourth rotation shaft is inserted in the third rounded-rectangular hole and the through hole, the fifth tube body is arranged with a second snap, the sixth tube body is arranged with a third hook snapped with the second snap.

In some embodiments, the vehicle further includes: an armrest, arranged on the rear pedal, wherein the armrest is connected to a seventh tube body. A side of the rear pedal away from the rear body is connected to an eighth tube body, the seventh tube body is in insertion-connection with the eighth tube body, the seventh tube body defines a fourth rounded-rectangular hole, an angle is formed between an extension direction of the fourth rounded-rectangular hole a direction of the insertion-connection, the eighth tube body defines a through hole, a fifth rotation shaft is inserted in the fourth rounded-rectangular hole and the through hole, the eighth tube body is rotatably connected with a third snap, the seventh tube body is arranged with a third hook snapped with the third snap; and a side of the eighth tube body near the rear pedal is connected to a tube clamp, the tube clamp defines an opening facing away from the eighth tube body, and the tube clamp is snapped with the armrest.

In some embodiments, the vehicle further includes a braking system. The braking system includes a brake and a brake pedal assembly. The brake pedal assembly comprises a bracket, a brake pedal and a parking pedal, the bracket is secured to the front body, the bracket is arranged with a parking block, the parking block defines a groove. The brake pedal is rotatably connected to the bracket, the brake pedal is connected to a parking hook snapped with the groove, the brake pedal, when rotating in a first direction, is configured to drive the brake to perform braking. The parking pedal is rotatably connected to the brake pedal, the parking pedal is linked to the parking hook; the parking pedal is configured to drive the parking hook to be snapped with the groove when the brake pedal drives the brake to perform braking and the parking pedal rotates in a second direction with respect to the brake pedal.

In some embodiments, the roof assembly further includes a reinforcing member, an end of the reinforcing member is fixedly connected to the front bracket and/or the rear bracket, and the other end of the reinforcing member extends towards the upper bracket and is detachably connected to the upper bracket.

According to the present disclosure, the vehicle has an extendable-retractable vehicle body. The vehicle body includes a front body and a rear body. The extension-retraction drive member drives the front body or the rear body to move adjust a distance between the front body and the rear body. On the one hand, the distance between the front body and the rear body may be adjusted to allow the user to operate and drive the vehicle more comfortably. On the other hand, the distance between the front body and the rear body may be reduced to reduce the size of the vehicle body, such that the vehicle may be transferred easily, and the cost of transferring the vehicle may be reduced. In the present disclosure, a foldable roof assembly is arranged. The foldable roof includes an upper bracket, a front bracket and a rear bracket. The front bracket and the rear bracket are configured to support the upper bracket. After the upper bracket is detached from the front bracket and the rear bracket, The front bracket and the rear bracket may be rotated and folded relative to the vehicle body, further reducing the space occupied by the vehicle.

### BRIEF DESCRIPTION OF THE DRAWINGS

FIG. 1 is a structural schematic view of a vehicle according to an embodiment of the present disclosure.
FIG. 2 is an exploded view of the vehicle according to an embodiment of the present disclosure.
FIG. 3 is a structural schematic view of the vehicle being retracted according to an embodiment of the present disclosure.
FIG. 4 is a structural schematic view of the roof assembly being retracted according to an embodiment of the present disclosure.
FIG. 5 is an exploded view of a bracket of the vehicle according to an embodiment of the present disclosure.
FIG. 6 is an exploded view of the roof assembly of the vehicle according to an embodiment of the present disclosure.
FIG. 7a is a structural schematic view of a state of a connection between a bottom of the front bracket and a front support of the vehicle according to an embodiment of the present disclosure.
FIG. 7b is a structural schematic view of another state of the connection between the bottom of the front bracket and the front support of the vehicle according to an embodiment of the present disclosure.
FIG. 8 is a structural schematic view of a backrest of the vehicle according to an embodiment of the present disclosure.
FIG. 9 is a structural schematic view of a third rounded-rectangular hole according to an embodiment of the present disclosure.
FIG. 10 is a structural schematic view of a rear bracket and a rear support of the vehicle according to an embodiment of the present disclosure.
FIG. 11 is an exploded view of a pedal assembly of the vehicle according to an embodiment of the present disclosure.
FIG. 12 is a structural schematic view of a rear seat and the pedal assembly of the vehicle according to an embodiment of the present disclosure.
FIG. 13 is a structural schematic view of the pedal assembly after being folded according to an embodiment of the present disclosure.
FIG. 14 is a structural schematic view of the vehicle when being completely folded according to an embodiment of the present disclosure.
FIG. 15 is a structural schematic view of a brake pedal assembly according to an embodiment of the present disclosure.
FIG. 16 is an exploded view of the brake pedal assembly according to an embodiment of the present disclosure.
FIG. 17a is a structural schematic view of a state of the brake pedal assembly according to an embodiment of the present disclosure.
FIG. 17b is a structural schematic view of another state of the brake pedal assembly according to an embodiment of the present disclosure.
FIG. 17c is a structural schematic view of still another state of the brake pedal assembly according to an embodiment of the present disclosure.

### DETAILED DESCRIPTION

In order to make the purpose, technical solutions and technical effects of the present disclosure to be clearer and more explicit, the present disclosure is hereinafter described in further detail by referring to the accompanying drawings and embodiments. Obviously, the described embodiments are only a part of but not all of the embodiments of the present disclosure. All other embodiments, which are obtained by any ordinary skilled person in the art based on the embodiments in the present disclosure without creative work, shall fall within the scope of the present disclosure.

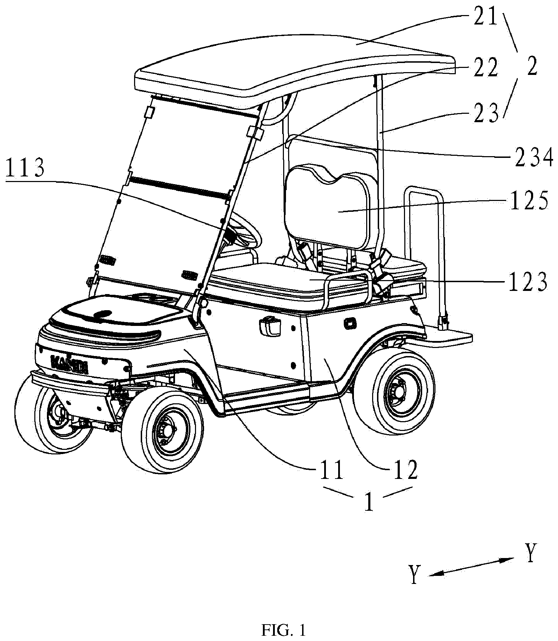

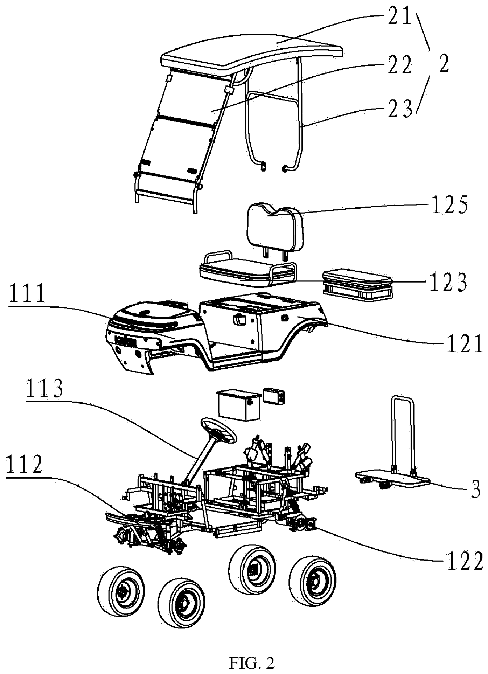

As shown in FIG. 1 and FIG. 2, FIG. 1 is a structural schematic view of a vehicle according to an embodiment of the present disclosure, and FIG. 2 is an exploded view of the vehicle according to an embodiment of the present disclosure. The vehicle includes a body assembly 1, an extension-retraction drive member (not shown), and a roof assembly 2. The body assembly 1 includes a front body 11 and a rear body 12. The front body 11 is slidably connected to the rear body 12 in a first direction (a Y direction shown in FIG. 1). Specifically, a steering wheel 113 is connected to the front body 11, and a seat 123 is connected to the rear body 12.

The extension-retraction drive member is disposed between and connected to the front body 11 and the rear body 12. The extension-retraction drive member is configured to drive the front body 11 and the rear body 12 to be extended or retracted in the first direction. Specifically, the extension-retraction drive member may be an electric actuator, a cylinder, or the like.

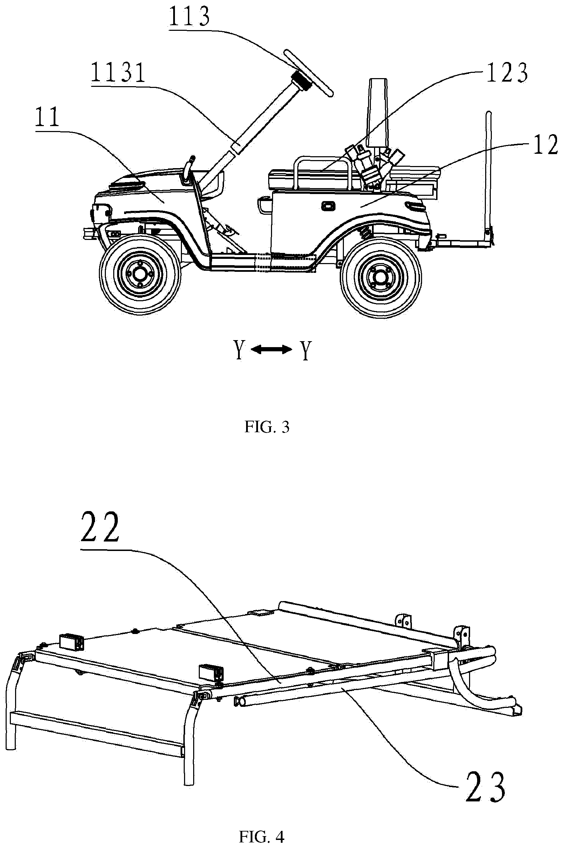

As shown in FIG. 3, FIG. 3 is a structural schematic view of the vehicle being retracted according to an embodiment of the present disclosure. The vehicle in the present disclosure has an extendable-retractable vehicle body. The vehicle body includes the front body 11 and the rear body 12. The extension-retraction drive member drives the front body 11 or the rear body 12 to move to adjust a distance between the front body and the rear body. On the one hand, for the extendable-retractable vehicle body, a distance between the steering wheel 113 and the seat 123 may be adjusted by adjusting the distance between the front body and the rear body, such that various drivers having various heights may drive and operate the vehicle more comfortably. On the other hand, the distance between the front body and the rear body may be reduced to reduce a size of the vehicle body, such that the vehicle body may be transferred easily, and a cost of transferring the vehicle body may be reduced.

The roof assembly 2 is detachably mounted on the body assembly 1. The roof assembly 2 includes a front bracket 22, a rear bracket 23, and an upper bracket 21. A bottom end of the front bracket 22 is rotationally connected to the front body 11. A top of the front bracket 22 is detachably connected to the upper bracket 21. A bottom of the rear bracket 23 is rotationally connected to the rear body 12. A top of the rear bracket 23 is detachably connected to the upper bracket 21.

As shown in FIG. 1, in the present disclosure, a foldable roof assembly 2 is further provided. The upper bracket 21, the front bracket 22 and the rear bracket 23 of the roof assembly 2 cooperatively forms a semi-enclosed structure supported above the body assembly 1 for sun shading and keeping the rain off. The front bracket 22 is configured to a front side the upper bracket 21, and the rear bracket 23 is configured to a rear side the upper bracket 21. Since the upper bracket 21 is detachably connected to the front bracket 22 and the rear bracket 23, when the upper bracket 21 is detached from the top of the front bracket 22 and the top of the rear bracket 23, the top of the front bracket 22 and the top of the rear bracket 23 are no longer fixed. Therefore, both the front bracket 22 and the rear bracket 23 may be rotated, such that the front bracket 22 and the rear bracket 23 may be folded towards a top of the vehicle body, further reducing the size of the vehicle. As shown in FIG. 4, FIG. 4 is a structural schematic view of the roof assembly being retracted according to an embodiment of the present disclosure.

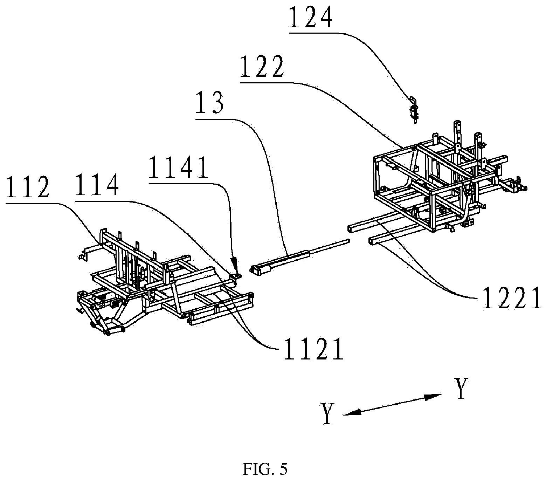

In some embodiments, as shown in FIG. 2 and FIG. 5, FIG. 5 is an exploded view of the bracket of the vehicle according to an embodiment of the present disclosure. As shown in FIG. 2, the front body 11 includes a front frame 112 and a front covering member 111 covering the front frame 112. The rear body 12 includes a rear frame 122 and a rear covering member 121 covering the rear frame 122. As shown in FIG. 5, the front frame 112 is connected to a first tube body 1121 extending along the first direction (Y-direction). The rear frame 122 is connected to a second tube body 1221 extending along the first direction. The first tube body 1121 is slidably connected to the second tube body 1221. An end of the second tube body 1221 is inserted into the first tube body 1121 from an end of the first tube body 1121. In the present embodiment, two first tube bodies 1121 and two second tube bodies 1221 are arranged, and each of the two first tube bodies 1121 and the two second tube bodies 1221 is a square tube body. The second tube body 1221 is slidably, in the first direction, arranged inside the first tube body 1121. The first tube body 1121 defines a sliding direction of the second tube body 1221. The extension-retraction drive member 13 is an electric actuator. A driving end of the electric actuator is fixedly connected to the rear frame 122. The other end of the electric actuator away from the driving end is fixedly connected to the front frame 112. The electric actuator may be extended and retracted to drive the front frame and the rear frame to be extended and retracted relative to each other (i.e., drive the front frame and the rear frame to move relative to each other to adjust a distance between the front frame and the rear frame), such that the front body and the rear body are driven to be extended and retracted relative to each other (i.e., the distance between the front body and the rear body is reduced or increased). The front covering member 111 is slidably arranged inside the rear covering member 121. In other embodiments, the first tube body 1121 may alternatively be slidably arranged insdie the second tube body 1221. The extension-retraction drive member 13 may alternatively be connected to the front covering member 111 and the rear covering member 121. The front frame 112 and the rear frame 122 may be slidably connected to each other by other means. For example, the front frame 112 is connected with a slider, and the rear frame 122 is connected with a slide groove extending in the first direction. In this way, the distance between the front frame and the rear frame is adjusted by sliding the slider in the slide groove.

Further, as shown in FIG. 5, the rear body 12 includes a limit pin 124 movably connected to the rear frame 122 and a limit plate 114 connected to the front frame 112. The limit plate 114 protrudes out of the front frame 112. The limit plate 114 defines a limit hole 1141 corresponding to the limit pin 124. When the vehicle body is unfolded in an extended state, the limit pin 124 is inserted into the limit hole 1141. In this case, a relative position of the front frame 112 and the rear frame 122 is fixed, and even if the extension-retraction drive member 13 is activated, the vehicle body cannot be extended or retracted, such that the user may drive and operate the vehicle safely. When the vehicle body is to be retracted, the limit pin 124 may firstly be pulled away from the limit hole 1141, and the extension-retraction drive member 13 is activated to drive the vehicle body to be extended and retracted. In some embodiments, in order to further improve safety, a tap switch may be arranged on the rear frame 122. The tap switch is signally connected to the extension-retraction drive member 13. In this way, when the limit pin 124 is detached from the limit hole 1141, the limit pin 124 triggers the tap switch to be on, the extension-retraction drive member 13 is able to be activated, and the vehicle body may be extended and retracted. When the limit pin 124 is inserted into the limit hole 1141, the tap switch is off, and the extension-retraction drive member 13 is unable to be activated, such that the extension-retraction drive member 13 may be prevented from being activated when the limit pin 124 is being inserted. Reliability of the frame is improved.

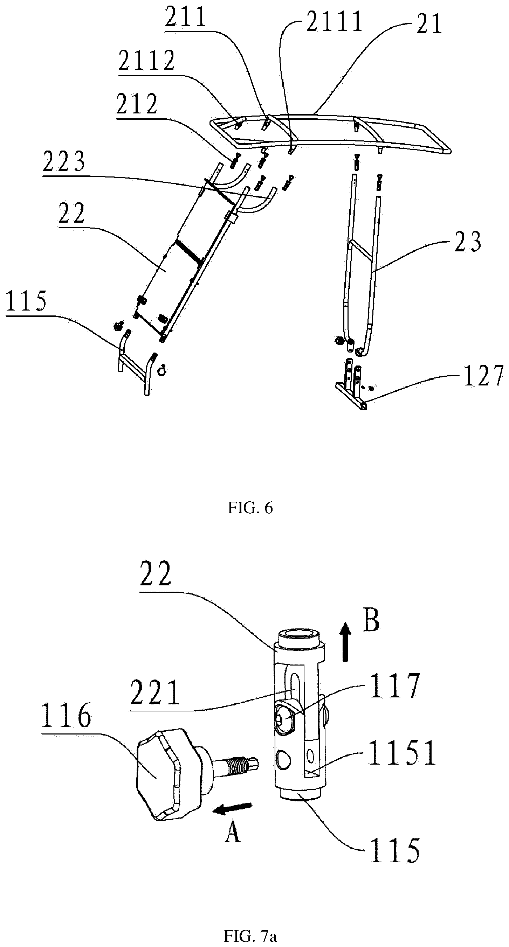

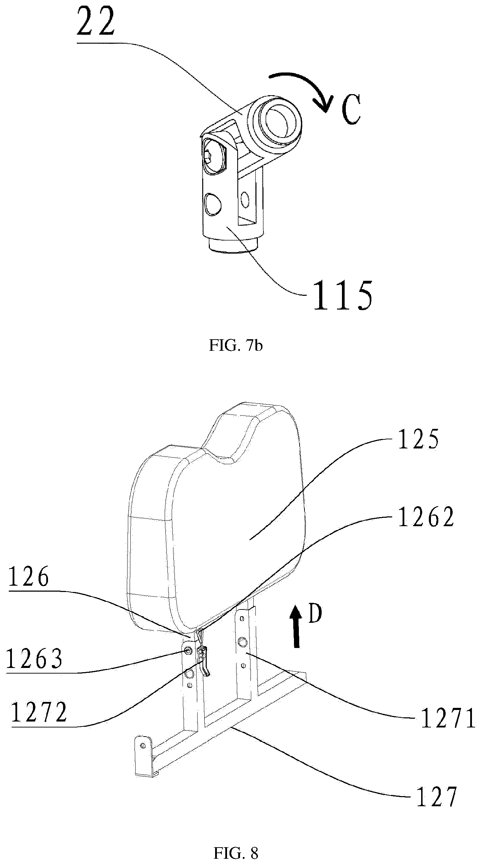

In some embodiments, as shown in FIG. 6, FIG. 6 is an exploded view of the roof assembly of the vehicle according to an embodiment of the present disclosure. A front support 115 is arranged on and protruding from the front body (not shown in FIG. 6). As shown in FIG. 7a and FIG. 7b, FIG. 7a to FIG. 7b are structural schematic views of various states of a connection between the bottom of the front bracket and a front support of the vehicle according to an embodiment of the present disclosure. A bottom of the front bracket 22 is inserted into a slot in the front support 115. The bottom end of the front bracket 22 defines a first rounded-rectangular hole 221 extending along an insertion direction. The front support 115 defines a through hole. A first rotation shaft 117 is inserted in the first rounded-rectangular hole 221 and the through hole. A bottom face of the slot is a limit face 1151 for restricting the front bracket 22 from rotating around the first rotation shaft 117. A first locking member 116 is inserted in the first rounded-rectangular hole 221. The front bracket 22 is fixedly connected to the front support 115 by the first locking member 116. In the present embodiment, the first locking member 116 is a locking bolt. The locking bolt passes through the first rounded-rectangular hole 221 to be threadedly connected to the front support 115. In this way, the front bracket 22 is fixed to the front support 115. When the front bracket 22 is to be folded, the first locking member 116 may be detached (along the direction A in FIG. 7 a). Further, the front bracket 22 may be pulled out along a direction of first rounded-rectangular hole 221 away from the front support 115 (in the direction B in FIG. 7 a). At this moment, an end surface of the front bracket 22 is away from the limit face 1151, and the front bracket 22 may be rotated in the direction C shown in FIG. 7b. In this way, the folding is completed. Since the folding may be performed only after the first locking member 116 being detached and subsequently the front bracket 22 being pulled out, the front bracket 22 may be positioned easily.

Further, as shown in FIG. 6, the roof assembly 2 further includes a reinforcement member 223. An end of the reinforcement member 223 is fixedly connected to a portion of the front bracket 22 near the top, and the other end of the reinforcement member 223 extends upwardly towards the upper bracket 21 and is detachably connected to the upper bracket 21. Specifically, six connecting posts 211 are arranged on and protruding from the upper bracket 21. Each connecting post 211 includes a tapered guide surface 2111 having a diameter gradually decreased along a direction away from the upper bracket 21. Two of the six connecting posts 211 are respectively inserted into tops of two sides of the front bracket 22; another two of the six connecting posts 211 are respectively inserted into tops of two sides of the reinforcement member 223; and the rest two of the six connecting posts 211 are respectively inserted into tops of two sides of the rear bracket 23. On the one hand, a diameter of an end of the connecting post 211 is small, and therefore, the connecting post 211 may be easily aligned to the front bracket 22, the reinforcement member 223, and the rear racket 23. On the other hand, as the connecting posts are inserted more deeply, a gap between the tapered guide surface 2111 and the front bracket 22, a gap between the tapered guide surface 2111 and the reinforcement member 223, and a gap between the tapered guide surface 2111 and the rear bracket 23 are gradually decreased, such that the upper bracket 21 may be connected stably. Since there are six fixing points on the upper bracket 21, the roof assembly 2 may be prevented from shaking. In addition, the reinforcement member 223 may serve as a handrail when passengers getting on and off the vehicle. The connecting post 211 is arranged with a connecting hook 2112. A connecting snap 212 is rotatably connected to each of the tops of the front bracket 22, the reinforcement member 223 and the rear bracket 23. The connecting hook 2112 may be snapped with the connecting hook 2112 to achieve fixation. For ease of assembly, the front bracket 22 is parallel to an end of the reinforcement member 223 near the upper bracket 21. In other embodiments, the reinforcement member 223 may be connected to the rear bracket 23, and in this case, the rear bracket 23 is parallel to the end of the reinforcement member 223 near the upper bracket 21.

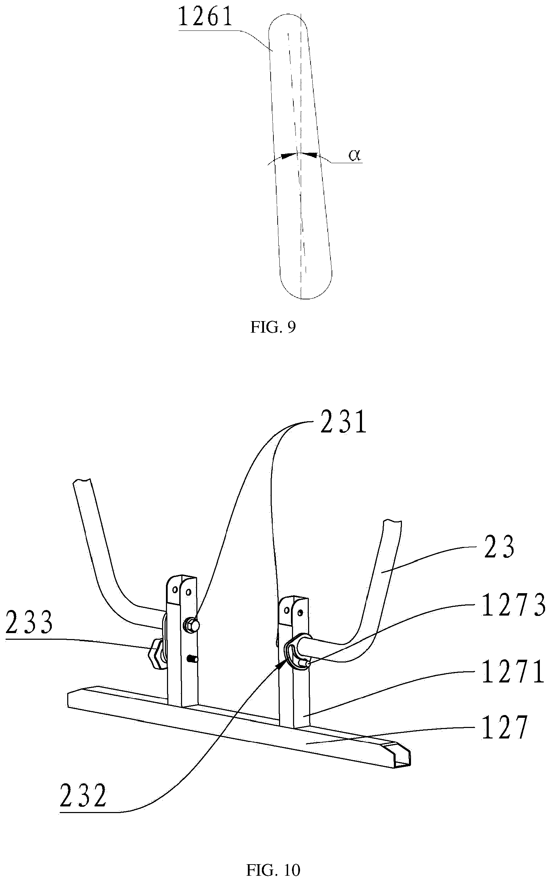

In some embodiments, as shown in FIG. 1, the vehicle further includes a backrest 125. The backrest 125 is mounted on the rear body 12. Specifically, the backrest 125 may be mounted on a rear side of the seat 123. As shown in FIG. 8, FIG. 8 is a structural schematic view of the backrest of the vehicle according to an embodiment of the present disclosure. Two third tube bodies 126 are connected to a bottom of the backrest 125. A rear support 127 is arranged on and protruding from the rear frame. The rear support 127 includes two fourth tube bodies 1271. Each third tube body 126 is inserted in one of the two fourth tube bodies 1271. Each third tube body 126 defines a second rounded-rectangular hole 1261. As shown in FIG. 9, FIG. 9 is a structural schematic view of a third rounded-rectangular hole according to an embodiment of the present disclosure. An angle α is generated between an extension direction of the rounded-rectangular hole 1261 (indicated by the dot-dash line in FIG. 9) and the insertion direction (indicated by the broken line in FIG. 9). The angle α is an acute angle. A diameter of the second rounded-rectangular hole 1261 gradually increases along a direction away from the backrest 125. The second rounded-rectangular hole 1261 is a conical inclined rounded-rectangular hole. As shown in FIG. 8, the fourth tube body 1271 defines a through hole. A second rotation shaft 1263 is inserted in the second rounded-rectangular hole 1261 and the through hole. A first snap 1272 is rotationally connected to the fourth tube body 1271. The third tube body 126 is arranged with a first hook 1262 that may be snapped with the first snap 1272. When the backrest 125 needs to be folded, the first snap 1272 may be rotated to be detached from the first hook 1262. Further, the backrest 125 may be pulled out along a direction of the second rounded-rectangular hole 1261 away from the rear support 127 (the D direction in FIG. 8). At this time, an engaging end of the second rotation shaft 1263 is moved from a small-diameter end of the second rounded-rectangular hole 1261 to a large-diameter end of the second rounded-rectangular hole 1261. The third tube body 126 gradually moves away from an inner wall of the fourth tube body 1271, such that the third tube body 126 does not attach to the inner wall of the fourth tube body 1271. The fourth tube body 1271 may not block the third tube body 126 from rotating. Therefore, the backrest 125 may be easily rotated forwardly to complete the folding. While assembling, the second rounded-rectangular hole 1261 is a tapered inclined rounded-rectangular hole, and therefore, when the third tube body 126 is gradually inserted into the fourth tube body 1271, the second rounded-rectangular hole 1261 of the third tube body 126 is tightly engaged to the second rotation shaft 1263. A rear outer wall of the third tube body 126 is tightly pressed against a rear inner wall of the fourth tube body 1271. Therefore, the engaging is more tight. In other embodiments, the second rounded-rectangular hole 1261 may be a flat and straight rounded-rectangular hole extending in the insertion direction.

In some embodiments, as shown in FIG. 10, FIG. 10 is a structural schematic view of the rear bracket and the rear support of the vehicle according to an embodiment of the present disclosure. The rear bracket 23 is rotatably connected to the fourth tube body 1271 through a third rotation shaft 231. Two third rotation shafts 231 are arranged, and each of the two fourth tube bodies 1271 is arranged with one of the two third rotation shafts 231. The rear bracket 23 defines a limit slot 232 extending along an arc. A center of the arc is located on the third rotation shaft 231. That is, the limit slot 232 is an arc slot and is located at a front of the rear bracket 23. The arc slot is configured to limit a rotation angle and a rotation direction of the rear bracket 23. A radius angle corresponding to the arc slot is equal to the rotation angle of the rear bracket 23. A limit member 1273 is arranged on and protruding from one fourth tube body 1271. The limit member 1273 is received in the limit slot 232 to limit a rotation range of the rear bracket 23. The rear bracket 23 is fixedly connected to the fourth tube body 1271 by a second locking member 233. In the present embodiment, the second locking member 233 is a locking bolt. The locking bolt and the limit slot 232 are disposed on an end of the rear bracket 23 corresponding to each of the two fourth tube bodies 1271. After the second locking member 233 is removed, the rear bracket 23 is able to be rotated forwardly and folded towards the vehicle body.

In some embodiments, as shown in FIG. 3, the steering wheel 113 includes a connecting tube 1131. The connecting tube 1131 is inserted in the front body 11. The connecting tube 1131 is secured to the front body 11 by a fastening bolt. The steering wheel 113 may be removed from the vehicle body after the fastening bolt is removed, such that more space is provided for folding the roof assembly (not shown in FIG. 3). As shown in FIG. 1, the rear bracket 23 is further arranged with a reinforcing bar 234 configured to reinforce the rear bracket 23. In addition, the reinforcing bar 234 may be configured to place the steering wheel 113 when the rear bracket 23 is folded and the steering wheel 113 is detached.

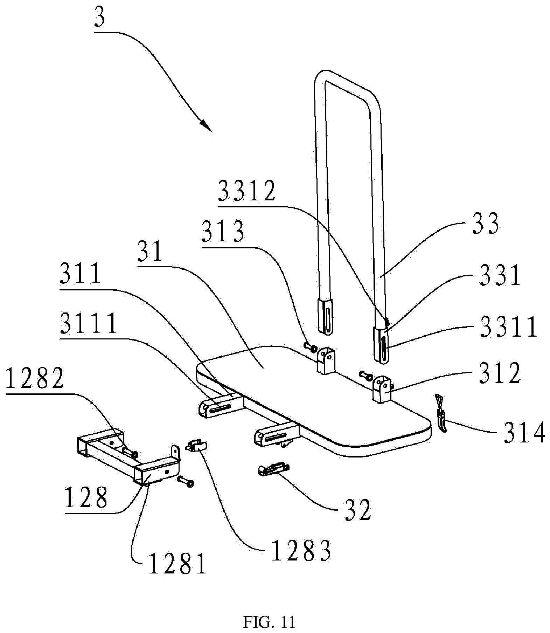

In some embodiments, as shown in FIG. 2, the vehicle further includes a pedal assembly 3, as shown in FIG. 11, FIG. 11 is an exploded view of the pedal assembly of the vehicle according to an embodiment of the present disclosure. The pedal assembly 3 includes a rear pedal 31, arranged on the rear body 12. The rear pedal 31 is connected to a fifth tube body 311. A side of the rear body 12 away from the front body 11 is arranged with a sixth tube body 128. The fifth tube body 311 is inserted in the sixth tube body 128. The fifth tube body 311 defines a third rounded-rectangular hole 3111. The third rounded-rectangular hole 3111 extends in the insertion direction. A diameter of the third rounded-rectangular hole 3111 gradually decreases along a direction approaching the rear pedal 31. The sixth tube body 128 defines a through hole. A fourth rotation shaft 1282 is inserted in the third rounded-rectangular hole 3111 and the through hole. The fifth tube body 311 is rotatably connected with a second snap 32, and the sixth tube body 128 is arranged with a second hook 1281 snapped with the second snap 32.

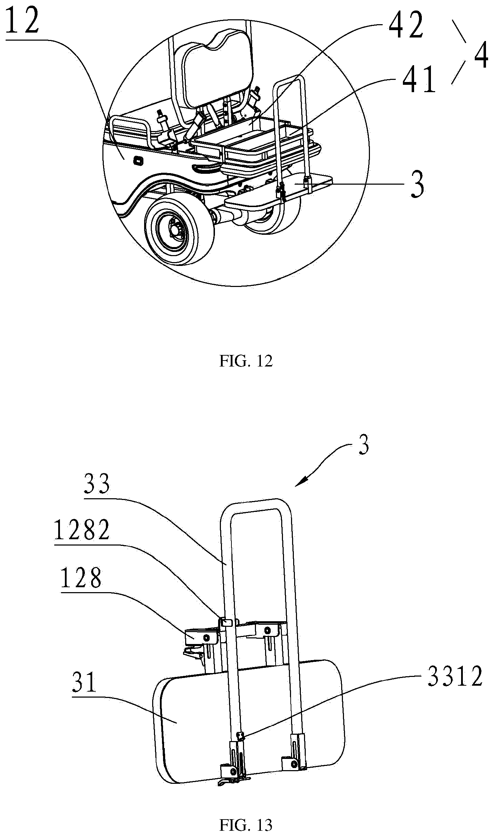

The rear seat 4 may be arranged at a rear of the vehicle body in order to increase the number of passenger seats. In some embodiments, as shown in FIG. 12, FIG. 12 is a structural schematic view of the rear seat and the pedal assembly of the vehicle according to an embodiment of the present disclosure. The rear seat 4 includes a storage basket 41 and a cover 42 rotatably connected to the storage basket 41. Articles may be stored in a storage space in the storage basket 41, and after the cover 42 is closed to the storage basket 41, passengers may sit on the cover.

The pedal assembly 3 is disposed at a rear of the vehicle body. The rear pedal 31 serves as a footrest for a passenger sitting at the rear of the vehicle. The rear pedal 31 is foldable. When the rear pedal 31 is to be folded, the second snap 32 may be rotated to be disengaged from the second hook 1281. Further, the rear pedal 31 may be pulled out along a direction of the third rounded-rectangular hole 3111 away from the sixth tube body 128. At this moment, an engaging end of the fourth rotation shaft 1282 is moved from a small-diameter end of the third rounded-rectangular hole 3111 to a large-diameter end of the third rounded-rectangular hole 3111, and the fifth tube body 311 is gradually moved away from the sixth tube body 128. The sixth tube body 128 may not block the fifth tube body 311 from rotating. In this way, the rear pedal 31 is rotated downwardly to complete the folding. During assembling, the third rounded-rectangular hole 3111 is a tapered rounded-rectangular hole, and therefore, while the fifth tube body 311 is gradually inserted into the sixth tube body 128, the fourth rotation shaft 1282 is tightly fitted to the third rounded-rectangular hole 3111. In other embodiments, the third rounded-rectangular hole 3111 may be a flat and straight rounded-rectangular hole extending in the insertion direction.

Further, the pedal assembly 3 further includes an armrest 33. The armrest 33 is arranged on the rear pedal 31. The armrest 33 is connected to a seventh tube body 331. An eighth tube body 312 is connected to a side of the rear pedal 31 away from the rear body. The seventh tube body 331 is inserted in the eighth tube body 312. The seventh tube body 331 defines a fourth rounded-rectangular hole 3311. An angle is formed between an extension direction of the fourth rounded-rectangular hole 3311 and the insertion direction. The angle may be an acute angle. The eighth tube body 312 defines a through hole. A fifth rotation shaft 313 is inserted in the fourth rounded-rectangular hole 3311 and the through hole. A third snap 314 is rotatably connected to the eighth tube body 312, and the seventh tube body 331 is arranged with a third hook 3312 snapped with the third snap 314. A tube clamp 1283 is arranged at a side of the eighth tube body 312 near of the rear pedal 31. The tube clamp 1283 defines an opening facing away from the eighth tube body 312. The tube clamp 1283 is snapped with the armrest 33.

The armrest 33 may also be folded. When the armrest 33 needs to be folded, the third snap 314 may be rotated to be detached from the third hook 3312, and the armrest 33 may be pulled out in a direction of the fourth rounded-rectangular hole 3311 away from the eighth tube body 312. Since the fourth rounded-rectangular hole 3311 is a taper inclined rounded-rectangular hole, the eighth tube body 312 may not block the seventh tube body 331 from rotating while the seventh tube body 331 is gradually moving away from the eighth tube body 312. At this moment, the armrest 33 may be rotated counterclockwise easily, and the folding is completed. Further, the armrest 33 may be fixed by being snapped inside the tube clamp 1283. As shown in FIG. 13, FIG. 13 is a structural schematic view of the pedal assembly after being folded according to an embodiment of the present disclosure. A plane on which the rear pedal 31 is located is substantially parallel to the armrest 33. The rear pedal 31 and the armrest 33 are both affixed to the rear of the vehicle body, such that the space occupied by the vehicle is reduced. In other embodiments, the fourth rounded-rectangular hole 3311 may be a flat and straight rounded-rectangular hole extending along the insertion direction.

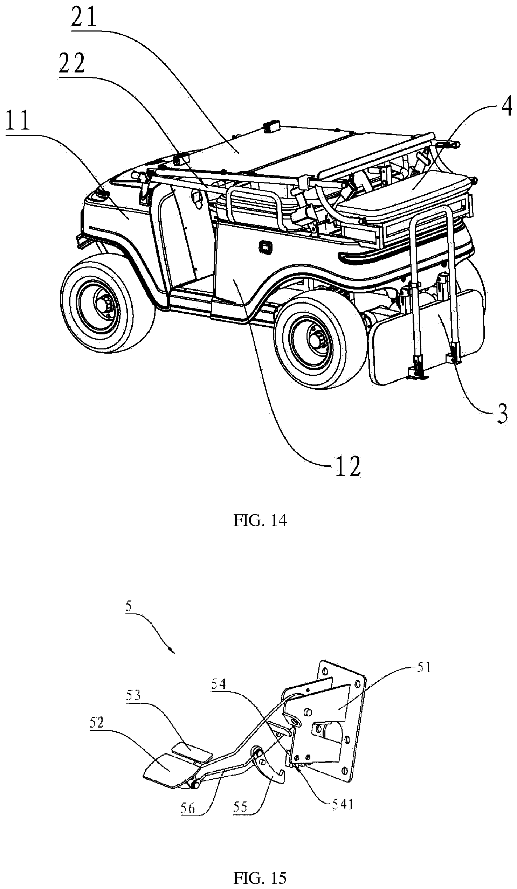

The vehicle may be folded and retracted by performing the following operations. Firstly, the upper bracket 21 is removed. Further, the lower steering wheel 113 is removed, and subsequently, the front body 11 and the rear body 12 are retracted. Finally, the backrest 125, the front bracket 22, the rear bracket 23, and the pedal assembly 3 are folded. The final folded state of the vehicle may be shown in FIG. 14. FIG. 14 is a structural schematic view of the vehicle when being completely folded according to an embodiment of the present disclosure. Compared to the fully unfolded structure of the vehicle shown in FIG. 1, the size of the vehicle after being folded is significantly reduced, such that the vehicle may be transferred easily, and the transferring costs may be reduced.

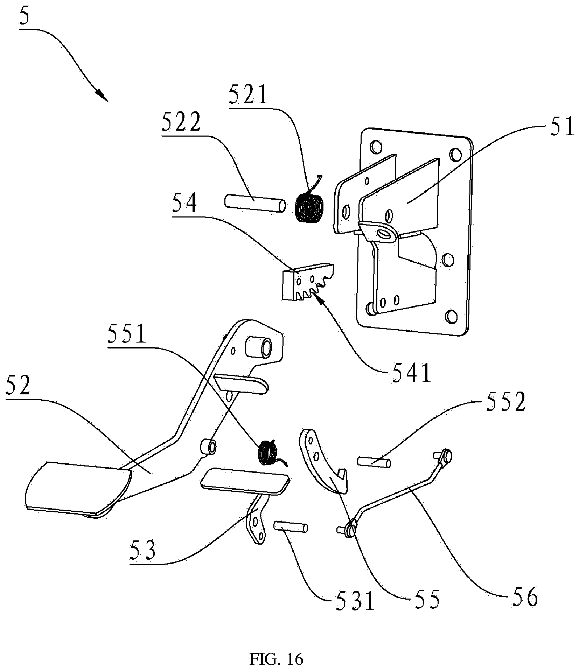

In some embodiments, the vehicle further includes a braking system. The braking system includes a brake (not shown) and a brake pedal assembly. As shown in FIG. 15 and FIG. 16, FIG. 15 is a structural schematic view of the brake pedal assembly according to an embodiment of the present disclosure, and FIG. 16 is an exploded view of the brake pedal assembly according to an embodiment of the present disclosure. The brake pedal assembly 5 is disposed at the bottom of the front body and includes a bracket 51, a brake pedal 52 and a parking pedal 53. The bracket 51 is fixed to the front body. The bracket 51 is arranged with a parking block 54. The parking block 54 defines a groove 541. The brake pedal 52 is rotatably connected to the bracket 51. The brake pedal 52 is connected to a parking hook 55 snapped with the groove 541. When the brake pedal 52 is rotating in a first direction, the brake pedal 52 may drive the brake to perform braking. The parking pedal 53 is rotatably connected to the brake pedal 52. The parking pedal 53 is coupled with the parking hook 55. When the brake pedal 52 drives the brake to perform braking and the parking pedal 53 is rotating in a second direction relative to the brake pedal 52, the parking pedal 53 may drive the parking hook 55 to snap with the groove 541.

When the brake pedal 52 is rotating in the first direction (the first direction may be a direction of the brake pedal 52 being stepped down), the brake pedal 52 controls the brake to perform braking. In a braking state, the parking pedal 53 is rotating in the second direction (the second direction may be a direction of the parking pedal 53 being stepped) with respect to the brake pedal 52. The parking pedal 53 drives the parking hook 55 to be snapped with the groove 541 of the parking block 54. Since the parking gear block 54 is arranged on the bracket 51 and the parking hook 55 is connected to the brake pedal 52, the brake pedal 52 is fixed and is maintained at the braking state. In this way, parking is performed. Since the brake pedal 52 and the parking pedal 53 of the present disclosure are configured as a one-piece and integral structure, the brake pedal assembly integrates braking and parking functions, a space of the driver compartment for receiving a handbrake may be saved, space utilization may be improved. In addition, retraction of the vehicle body may not be affected by the handbrake, the vehicle body may be retracted more severely into an even smaller size. Furthermore, since the brake pedal 52 and the parking pedal 53 are configured as a one-piece and integral structure, braking and parking may be achieved by stepping on the pedal only.

Specifically, the parking block 54 is disposed at a bottom of the bracket 51. A plurality of grooves 541 may be defined. The plurality of grooves 541 are arranged along a direction of the brake pedal 52 approaching the bracket 51. A trajectory formed by the plurality of grooves 541 is an arc protruding in a direction away from the bracket 51. Since the parking block 54 defines the plurality of grooves 541, the brake pedal 52 may be fixed by the parking hook 55 being snapped with any one of the plurality of grooves 541. Therefore, the brake pedal 52 may be fixed by the parking hook 55 in a wide range of rotation. Regardless of the extent of the parking pedal 53 being stepped, the parking may always be achieved by stepping the parking pedal 53. Specifically, when the brake pedal 52 is stepped slightly and the parking pedal 53 is stepped under such a state, the parking hook 55 may be snapped with one of the plurality of grooves 541 disposed near the brake pedal 52. When the brake pedal 52 is stepped to a large extent and the parking pedal 53 is stepped under such a state, the parking hook 55 may be snapped with one of the plurality of grooves 541 disposed away from the brake pedal 52. Therefore, parking can always be achieved, and less structural precision is required to achieve the parking, operations may be increased more easily. In some embodiments, a width of the groove 541 gradually decreases in a direction from the opening to the groove body, such that the parking hook 55 may be extended into the groove 541 more easily, difficulty of snapping may reduced. In order to further reduce the difficulty of snapping, the width of the parking hook 55 gradually increases from the free end to the root.

In detail, as shown in FIG. 16, the brake pedal assembly 5 further includes a first reset spring 521. The first reset spring 521 is connected between the bracket 51 and the brake pedal 52. The first reset spring 521 is configured to apply a force to the brake pedal 52 to enable the brake pedal 52 to rotate in a direction opposite to the first direction. The bracket 51 is arranged with a sixth rotation shaft 522. The brake pedal 52 is rotatably arranged on the sixth rotation shaft 522. The first reset spring 521 is a torsion spring. The first reset spring 521 sleeves the sixth rotation shaft 522. The brake pedal assembly 5 further includes a second reset spring 551. The second reset spring 551 is connected between the parking hook 55 and the brake pedal 52. The second reset spring 551 is configured to apply a force to the parking hook 55 to enable the parking hook 55 to rotate in a direction opposite to the second direction. Specifically, the brake pedal 52 is arranged with a seventh rotation shaft 552. The parking hook 55 is rotatably arranged on the seventh rotation shaft 552. The second reset spring 551 is a torsion spring. The second reset spring 551 sleeves the seventh rotation shaft 552. The brake pedal 52 is arranged with an eighth rotation shaft 531. The parking pedal 53 is rotatably arranged on the eighth rotation shaft 531. The brake pedal assembly 5 further includes a connecting rod 56. Two ends of the connecting rod 56 are respectively rotatably connected to the parking pedal 53 and the parking hook 55. The parking pedal 53 is coupled to the parking hook 55 through a linking rod. The linking rod may be simple, and synchronous action may be achieved by the linking rod efficiently. Rotation of the parking hook 55 is achieved by stepping the parking pedal 53. In other embodiments, the parking pedal 53 and the parking hook 55 may also be linked by other transmission structures. For example, the linkage may be achieved by a gear set between the parking pedal 53 and the parking hook 55. When the parking pedal 53 is rotated in the second direction, the gear set is driven to rotate to further drive the parking hook 55 to rotate.

When the brake pedal 52 is being stepped and when the force applied to the brake pedal 52 is released (such as lifting the foot), the first reset spring 521 drives the brake pedal 52 to be reset. The brake pedal 52 rotates around the sixth rotation shaft 522 to be reset to an original position, and the brake no longer applies the brake. In addition, when the parking hook 55 is snapped with the groove 541, the first reset spring 521 provides a rebound force for the brake pedal 52 in the direction opposite to the first direction, such that the parking hook 55 always abuts against an inner wall of the groove 541, the parking hook 55 may not be disengaged from the groove 541, and a parking state is maintained. In other embodiments, the first reset spring 521 may be an elastic structure such as a tension spring.

When the parking pedal 53 is being stepped and when the force applied to the parking pedal 53 is released (such as lifting the foot), the second reset spring 551 drives the parking pedal 53 to be reset, and the parking pedal 53 rotates around the seventh rotation shaft 552 to be reset to an original position. In other embodiments, the second reset spring 551 may be an elastic structure such as a tension spring.

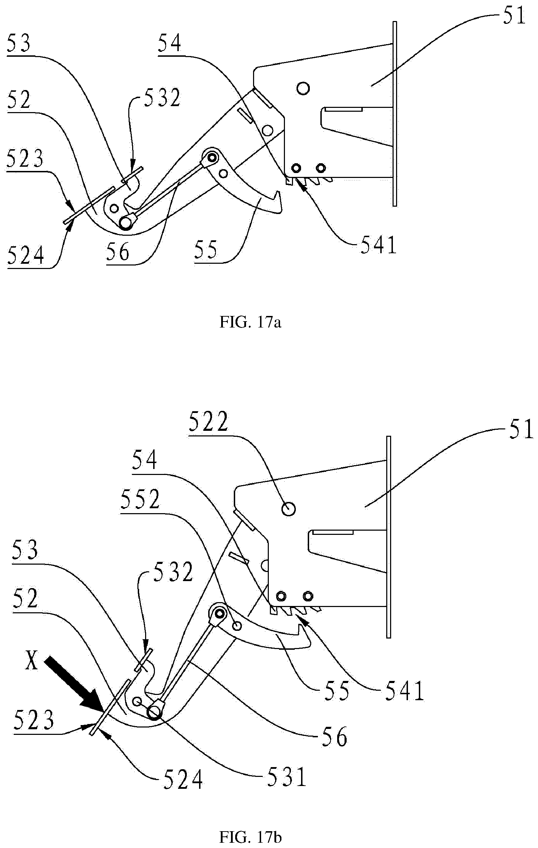

As shown in FIG. 17a to FIG. 17c, FIG. 17a to FIG. 17c are structural schematic views of various states of the brake pedal assembly according to an embodiment of the present disclosure. The brake pedal 52 includes a first pedal surface 523 and a brake limit surface 524 opposite to the first pedal surface 523. The parking pedal 53 includes a second pedal surface 532. The brake limit surface 524 is configured to limit the parking pedal 53 from rotating in the direction opposite to the second direction. In this way, when the brake pedal 52 and the parking pedal 53 are at rest relative to each other, the first pedal surface 523 is aligned with the second pedal surface 532. A structure of the brake pedal 52 being not stepped is shown in FIG. 3a. The first pedal surface 523 of the brake pedal 52 facing the driver's foot bottom is aligned with the second pedal surface 532 of the parking pedal 53 facing the driver's foot bottom. At this moment, surfaces of the brake pedal assembly contacting the foot bottom include the first pedal surface 523 and the second pedal surface 532. A relatively large contact area is achieved, and the driver may apply the force for stepping the brake pedal easily. In this state, since the brake pedal 52 is located away from the bracket 51, the parking hook 55 is located away from the parking block 54 on the bracket 51. Even if the parking pedal 53 is mistakenly stepped, the parking hook 55 cannot be snapped with the groove 541 of the parking block 54, and rotation of the brake pedal 52 may not be affected.

A state of the brake pedal 52 being stepped is shown in FIG. 17b. When the brake pedal 52 is rotating in the first direction (X-direction, counterclockwise) taking the sixth rotation shaft 522 as the rotation axis, the brake pedal 52 remains stationary relative with the parking pedal 53, and the first pedal surface 523 is aligned with the second pedal surface 532. In this state, the brake pedal 52 is disposed closer to the bracket 51, and therefore, the parking hook 55 on the brake pedal 52 is driven to approach the parking block 54 on the bracket 51.

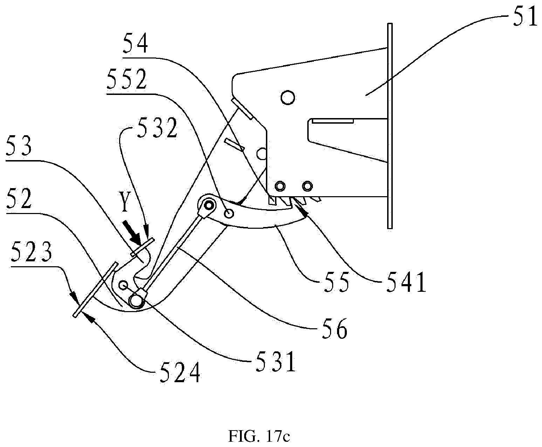

FIG. 17c shows the parking pedal 53 being stepped while the brake pedal 52 is stepped. The brake pedal 52 remains close to the bracket 51 in FIG. 17b. At this moment, the brake continues to brake, whereas the parking pedal 53 rotates relative to the brake pedal 52 in a second direction (Y-direction., clockwise) taking the eighth rotation shaft 531 as the rotation axis. The parking pedal 53 pulls the connecting rod 56, such that the parking hook 55 is driven to rotate counterclockwise taking the seventh rotation shaft 552 as the rotation axis, until the parking hook 55 is snapped into the groove 541. In this state, the brake pedal 52 may always have, under the action of the first reset spring (not shown in FIG. 17c), a tendency of being reset in the direction opposite to the first direction, such that the parking hook 55 always abuts against the inner wall of the groove 541, ensuring secure snapping. When the parking pedal 53 is no longer stepped, the parking pedal 53 is rotated, under the action of the second reset spring, in the direction opposite to the second direction. When the parking pedal 53 is rotated to allow the second pedal surface 532 to be aligned with the first pedal surface 523, the brake limit surface 524 prevents the parking pedal 53 from further rotating, ensuring the second pedal surface 532 to be aligned with the first pedal surface 523.

In some embodiments, the second pedal surface 532 is located on a side of the first pedal surface 523 near the bracket 51. That is, when the driver's foot steps on the brake pedal 52 and the parking pedal 53, the first pedal surface 523 is disposed closer to the driver's toe. Therefore, while the driver is using the foot bottom to step on the brake pedal 52, the driver may simultaneously use the toe of the foot to drive the parking pedal 53 to rotate. The operation is more easy. When the driver only needs to perform a braking operation, the driver may use the toe to step on the second pedal surface 532 to prevent the parking pedal 53 from being stepped mistakenly. In some embodiments, an area of the second pedal surface 532 is larger than an area of the first pedal surface 523. Since braking operations may be performed more frequently than parking operations, increasing the area of the second pedal surface 532 allows the braking operations to be performed more easily and reduces the probability of accidentally touching the parking pedal 53.

The above shows only an embodiment of the present disclosure, and does not limit the patent scope of the present disclosure. Any equivalent structure or equivalent process transformations made based on the content of the specification and the accompanying drawings of the present disclosure, applied directly or indirectly in other related technical fields, shall be equivalently included in the scope of the present disclosure.

## Claims

1. A vehicle, **characterized by** comprising:
a body assembly (1), comprising a front body (11) and a rear body (12), wherein the front body (11) is slidably, in a first direction, connected to the rear body (12);
an extension-retraction drive member, connected between the front body (11) and the rear body (12), wherein the extension-retraction drive member is configured to drive the front body (11) and the rear body (12) to be extended and retracted relative to each other in the first direction;
a roof assembly (2), detachably mounted on the body assembly (1) and comprising a front bracket (22), a rear bracket (23), and an upper bracket (21); wherein a bottom of the front bracket (22) is rotatably connected to the front body (11), and a top of the front bracket (22) is detachably connected to the upper bracket (21); a bottom of the rear bracket (23) is rotatably connected to the rear body (12), and a top of the rear bracket (23) is detachably connected to the upper bracket (21).

2. The vehicle according to claim 1, wherein, the front body (11) comprises a front frame (112), the front frame (112) is connected with a first tube body (1121) extending in the first direction; the rear body (12) comprises a rear frame (122), the rear frame (122) is connected with a second tube body (1221) extending in the first direction; the first tube body (1121) is slidably connected with the second tube body (1221), an end of the second tube body (1221) is inserted into the first tube body (1121) from an end of the first tube body (1121).

3. The vehicle according to claim 2, wherein the rear body (12) comprises a limit pin (124) movably connected to the rear frame (122);
the front frame (112) is connected to a limit plate (114), the limit plate (114) protrudes from the front frame (112), the limit plate (114) defines a limit hole corresponding to the limit pin (124).

4. The vehicle according to claim 1, wherein the front body (11) is arranged with a front support (115) protruding from the front body (11);
the bottom of the front bracket (22) is in insertion-connection with the front support (115); one of the bottom of the front bracket (22) and the front support (115) defines a first rounded-rectangular hole (221) extending in a direction of the insertion-connection, the other one of the bottom of the front bracket (22) and the front support (115) defines a through hole and has a limit surface, the limit surface is configured to limit the front bracket (22) from rotating relative to the front support (115); a first rotation shaft (117) is inserted in the first rounded-rectangular hole (221) and the through hole, a first locking member (116) is inserted in the first rounded-rectangular hole (221); the front bracket (22) and the front support (115) are fixedly connected to each other by the first locking member (116).

5. The vehicle according to claim 1, further comprising:
a backrest (125), mounted on the rear body (12) and connected to a third tube body (126);
wherein, the rear body (12) is arranged with a rear support (127) protruding from the rear body (12);
the rear support (127) comprises a fourth tube body (1271), the third tube body (126) is in insertion-connection with the fourth tube body (1271), the third tube body (126) defines a second rounded-rectangular hole (1261);
an angle is formed between an extension direction of the second rounded-rectangular hole (1261) and a direction of the insertion-connection, a diameter of the second rounded-rectangular hole (1261) is gradually increased in a direction away from the backrest (125), the fourth tube body (1271) defines a through hole;
a second rotation shaft (1263) is inserted in the second rounded-rectangular hole (1261) and the through hole, a first snap (1272) is rotatably connected to the fourth tube body (1271), the third tube body (126) is arranged with a first hook (1262) snapped with the first snap (1272).

6. The vehicle according to claim 5, wherein, the rear bracket (23) is rotatably connected to the fourth tube body (1271) by a third rotation shaft (231), the rear bracket (23) defines a limit slot (232), the limit slot extends along an arc, a center of a circle of the arc is located on the third rotation shaft (231), a limit member (1273) is arranged on and protrudes from the fourth tube body (1271), the limit member (1273) is received in the limit slot (232) to limit a rotational range of the rear bracket (23), and the rear bracket (23) is fixedly connected to the fourth tube body (1271) by a second locking member (233).

7. The vehicle according to claim 1, further comprising:
a rear pedal (31), arranged on the rear body (12), wherein the rear pedal (31) is connected to a fifth tube body (311);
wherein, a side of the rear body (12) away from the front body (11) is connected to a sixth tube body (128), the fifth tube body (311) is in insertion-connection with the sixth tube body (128), the fifth tube body (311) defines a third rounded-rectangular hole, the third rounded-rectangular hole extends in a direction of the insertion-connection, a diameter of the third rounded-rectangular hole (3111) is gradually increased in a direction approaching the rear body (12), the sixth tube body (128) defines a through hole, a fourth rotation shaft (1282) is inserted in the third rounded-rectangular hole (3111) and the through hole, the fifth tube body (311) is arranged with a second snap (32), the sixth tube body (128) is arranged with a third hook (3312) snapped with the second snap (32).

8. The vehicle according to claim 7, further comprising:
an armrest (33), arranged on the rear pedal (31), wherein the armrest (33) is connected to a seventh tube body (331);
wherein, a side of the rear pedal (31) away from the rear body (12) is connected to an eighth tube body (312), the seventh tube body (331) is in insertion-connection with the eighth tube body (312), the seventh tube body (331) defines a fourth rounded-rectangular hole (3311), an angle is formed between an extension direction of the fourth rounded-rectangular hole (3311) a direction of the insertion-connection, the eighth tube body (312) defines a through hole, a fifth rotation shaft (313) is inserted in the fourth rounded-rectangular hole (3311) and the through hole, the eighth tube body (312) is rotatably connected with a third snap (314), the seventh tube body (331) is arranged with a third hook (3312) snapped with the third snap (314); and
a side of the eighth tube body (312) near the rear pedal (31) is connected to a tube clamp (1283), the tube clamp (1283) defines an opening facing away from the eighth tube body (312), and the tube clamp (1283) is snapped with the armrest (33).

9. The vehicle according to claim 1, further comprising: a braking system, the braking system comprising a brake and a brake pedal assembly (5);
wherein, the brake pedal assembly (5) comprises a bracket (51), a brake pedal (52) and a parking pedal (53), the bracket (51) is secured to the front body (11), the bracket (51) is arranged with a parking block (54), the parking block (54) defines a groove;
the brake pedal (52) is rotatably connected to the bracket (51), the brake pedal (52) is connected to a parking hook (55) snapped with the groove, the brake pedal (52), when rotating in a first rotation direction, is configured to drive the brake to perform braking;
the parking pedal (53) is rotatably connected to the brake pedal (52), the parking pedal (53) is linked to the parking hook (55); the parking pedal (53) is configured to drive the parking hook (55) to be snapped with the groove when the brake pedal (52) drives the brake to perform braking and the parking pedal (53) rotates in a second rotation direction with respect to the brake pedal (52).

10. The vehicle according to claim 1, wherein, the roof assembly (2) further comprises a reinforcing member, an end of the reinforcing member is fixedly connected to the front bracket (22) and/or the rear bracket (23), and the other end of the reinforcing member extends towards the upper bracket (21) and is detachably connected to the upper bracket (21).

11. The vehicle according to claim 9, wherein the brake pedal (52) comprises a first pedal surface (523) and a brake limit surface (524) opposite to the first pedal surface (523), the parking pedal (53) comprises a second pedal surface (532); the brake limit surface (524) is configured to limit the parking pedal (53) from rotating in a direction opposite to the second rotation direction.

12. The vehicle according to claim 11, wherein when the brake pedal (52) and the parking pedal (53) are at rest relative to each other, the first pedal surface (523) is aligned with the second pedal surface (532).

13. The vehicle according to claim 9, wherein the brake pedal assembly (5) further comprises a first reset spring, connected between the bracket (51) and the brake pedal (52), the first reset spring is configured to apply a force to the brake pedal (52) to drive the brake pedal (52) to rotate in a direction opposite to the first rotation direction.

14. The vehicle according to claim 13, wherein the brake pedal assembly (5) further comprises a second reset spring, connected between the parking hook (55) and the brake pedal (52); the second reset spring is configured to apply a force to the parking hook (55) to drive the parking hook (55) to rotate in a direction opposite to the second rotation direction.

## Amended claims

### Amended claims in accordance with Rule 137(2) EPC.

1. A vehicle, comprising:
a body assembly (1), comprising a front body (11) and a rear body (12), wherein the front body (11) is slidably, in a first direction, connected to the rear body (12);
an extension-retraction drive member, connected between the front body (11) and the rear body (12), wherein the extension-retraction drive member is configured to drive the front body (11) and the rear body (12) to be extended and retracted relative to each other in the first direction;
a roof assembly (2), detachably mounted on the body assembly (1) and comprising a front bracket (22), a rear bracket (23), and an upper bracket (21); wherein a bottom of the front bracket (22) is rotatably connected to the front body (11), and a top of the front bracket (22) is detachably connected to the upper bracket (21); a bottom of the rear bracket (23) is rotatably connected to the rear body (12), and a top of the rear bracket (23) is detachably connected to the upper bracket (21);
wherein the vehicle is **characterized in that**,
the front body (11) is arranged with a front support (115) protruding from the front body (11);
the bottom of the front bracket (22) is in insertion-connection with the front support (115); one of the bottom of the front bracket (22) and the front support (115) defines a first rounded-rectangular hole (221) extending in a direction of the insertion-connection, the other one of the bottom of the front bracket (22) and the front support (115) defines a through hole and has a limit surface, the limit surface is configured to limit the front bracket (22) from rotating relative to the front support (115); a first rotation shaft (117) is inserted in the first rounded-rectangular hole (221) and the through hole, a first locking member (116) is inserted in the first rounded-rectangular hole (221); the front bracket (22) and the front support (115) are fixedly connected to each other by the first locking member (116).

2. The vehicle according to claim 1, wherein, the front body (11) comprises a front frame (112), the front frame (112) is connected with a first tube body (1121) extending in the first direction; the rear body (12) comprises a rear frame (122), the rear frame (122) is connected with a second tube body (1221) extending in the first direction; the first tube body (1121) is slidably connected with the second tube body (1221), an end of the second tube body (1221) is inserted into the first tube body (1121) from an end of the first tube body (1121).

3. The vehicle according to claim 2, wherein the rear body (12) comprises a limit pin (124) movably connected to the rear frame (122);
the front frame (112) is connected to a limit plate (114), the limit plate (114) protrudes from the front frame (112), the limit plate (114) defines a limit hole corresponding to the limit pin (124).

4. The vehicle according to claim 1, further comprising:
a backrest (125), mounted on the rear body (12) and connected to a third tube body (126);
wherein, the rear body (12) is arranged with a rear support (127) protruding from the rear body (12);
the rear support (127) comprises a fourth tube body (1271), the third tube body (126) is in insertion-connection with the fourth tube body (1271), the third tube body (126) defines a second rounded-rectangular hole (1261);
an angle is formed between an extension direction of the second rounded-rectangular hole (1261) and a direction of the insertion-connection, a diameter of the second rounded-rectangular hole (1261) is gradually increased in a direction away from the backrest (125), the fourth tube body (1271) defines a through hole;
a second rotation shaft (1263) is inserted in the second rounded-rectangular hole (1261) and the through hole, a first snap (1272) is rotatably connected to the fourth tube body (1271), the third tube body (126) is arranged with a first hook (1262) snapped with the first snap (1272).

5. The vehicle according to claim 4, wherein, the rear bracket (23) is rotatably connected to the fourth tube body (1271) by a third rotation shaft (231), the rear bracket (23) defines a limit slot (232), the limit slot extends along an arc, a center of a circle of the arc is located on the third rotation shaft (231), a limit member (1273) is arranged on and protrudes from the fourth tube body (1271), the limit member (1273) is received in the limit slot (232) to limit a rotational range of the rear bracket (23), and the rear bracket (23) is fixedly connected to the fourth tube body (1271) by a second locking member (233).

6. The vehicle according to claim 1, further comprising:
a rear pedal (31), arranged on the rear body (12), wherein the rear pedal (31) is connected to a fifth tube body (311);
wherein, a side of the rear body (12) away from the front body (11) is connected to a sixth tube body (128), the fifth tube body (311) is in insertion-connection with the sixth tube body (128), the fifth tube body (311) defines a third rounded-rectangular hole, the third rounded-rectangular hole extends in a direction of the insertion-connection, a diameter of the third rounded-rectangular hole (3111) is gradually increased in a direction approaching the rear body (12), the sixth tube body (128) defines a through hole, a fourth rotation shaft (1282) is inserted in the third rounded-rectangular hole (3111) and the through hole, the fifth tube body (311) is arranged with a second snap (32), the sixth tube body (128) is arranged with a third hook (3312) snapped with the second snap (32).

7. The vehicle according to claim 6, further comprising:
an armrest (33), arranged on the rear pedal (31), wherein the armrest (33) is connected to a seventh tube body (331);
wherein, a side of the rear pedal (31) away from the rear body (12) is connected to an eighth tube body (312), the seventh tube body (331) is in insertion-connection with the eighth tube body (312), the seventh tube body (331) defines a fourth rounded-rectangular hole (3311), an angle is formed between an extension direction of the fourth rounded-rectangular hole (3311) a direction of the insertion-connection, the eighth tube body (312) defines a through hole, a fifth rotation shaft (313) is inserted in the fourth rounded-rectangular hole (3311) and the through hole, the eighth tube body (312) is rotatably connected with a third snap (314), the seventh tube body (331) is arranged with a third hook (3312) snapped with the third snap (314); and
a side of the eighth tube body (312) near the rear pedal (31) is connected to a tube clamp (1283), the tube clamp (1283) defines an opening facing away from the eighth tube body (312), and the tube clamp (1283) is snapped with the armrest (33).

8. The vehicle according to claim 1, further comprising: a braking system, the braking system comprising a brake and a brake pedal assembly (5);
wherein, the brake pedal assembly (5) comprises a bracket (51), a brake pedal (52) and a parking pedal (53), the bracket (51) is secured to the front body (11), the bracket (51) is arranged with a parking block (54), the parking block (54) defines a groove;
the brake pedal (52) is rotatably connected to the bracket (51), the brake pedal (52) is connected to a parking hook (55) snapped with the groove, the brake pedal (52), when rotating in a first rotation direction, is configured to drive the brake to perform braking;
the parking pedal (53) is rotatably connected to the brake pedal (52), the parking pedal (53) is linked to the parking hook (55); the parking pedal (53) is configured to drive the parking hook (55) to be snapped with the groove when the brake pedal (52) drives the brake to perform braking and the parking pedal (53) rotates in a second rotation direction with respect to the brake pedal (52).

9. The vehicle according to claim 1, wherein, the roof assembly (2) further comprises a reinforcing member, an end of the reinforcing member is fixedly connected to the front bracket (22) and/or the rear bracket (23), and the other end of the reinforcing member extends towards the upper bracket (21) and is detachably connected to the upper bracket (21).

10. The vehicle according to claim 8, wherein the brake pedal (52) comprises a first pedal surface (523) and a brake limit surface (524) opposite to the first pedal surface (523), the parking pedal (53) comprises a second pedal surface (532); the brake limit surface (524) is configured to limit the parking pedal (53) from rotating in a direction opposite to the second rotation direction.

11. The vehicle according to claim 10, wherein when the brake pedal (52) and the parking pedal (53) are at rest relative to each other, the first pedal surface (523) is aligned with the second pedal surface (532).

12. The vehicle according to claim 8, wherein the brake pedal assembly (5) further comprises a first reset spring, connected between the bracket (51) and the brake pedal (52), the first reset spring is configured to apply a force to the brake pedal (52) to drive the brake pedal (52) to rotate in a direction opposite to the first rotation direction.

13. The vehicle according to claim 12, wherein the brake pedal assembly (5) further comprises a second reset spring, connected between the parking hook (55) and the brake pedal (52); the second reset spring is configured to apply a force to the parking hook (55) to drive the parking hook (55) to rotate in a direction opposite to the second rotation direction.
